# EUROPEAN PATENT APPLICATION

(11) **EP 1 764 142 A2**
(43) Date of publication of application: **21.03.2007**
(21) Application number: 06120995.3
(22) Date of filing: 20.09.2006
(51) Int. Cl.: B01D 25/24, B01D 35/027, E02B 1/00, E03F 1/00

(54) **Cleaning of fluids using filtration**

(30) Priority: 20.09.2005 US 718717 P
(71) Applicant: Pank, Thomas E., Walkersville, MD 21793 (US); Meyermann, Austin T., Winterville GA 30683 (US)
(72) Inventor: Pank, Thomas E., Walkersville, MD 21793 (US); Meyermann, Austin T., Winterville GA 30683 (US)
(74) Representative: Burrows, Anthony Gregory

(57) **Abstract**

Apparatus for cleaning stormwater runoff comprises a tank 104 for receiving the water to be cleaned, an inverted tank 101 located in the tank 104, the inverted tank 101 being open at its lower end and closed at its upper end, a stormwater filter 201 located in the inverted tank 101 and through which the water to be cleaned must pass as the water level rises in the inverted tank 101, an output conduit 204 for receiving the water that has passed through the filter 201, a valve in the output conduit 204 for allowing and preventing flow through the conduit 204, and a float responsive to the level of the water in the inverted tank 101 for controlling the valve.

## Description

This invention relates to the cleaning of fluids, in particular to the filtering of liquids. Gravity separators for dealing with stormwater pollution are disclosed in US-A-5,746,911 and US-A-6,264,835. While gravity separators accomplish a great deal and are an important factor in environmental protection, they tend not to remove dissolved contaminants, nor sediment particles in the fine silt and clay size range.

Filtration is a proven method of removing dissolved and very fine impurities from a fluid. The most commonly used filter in the stormwater industry is a depth filter. A depth filter uses a media (sand. for example) that the fluid must pass through. The removal is achieved by a combination of two mechanisms; transport and attachment. In a sand filter, the individual grains obstruct the flow of the water, forcing the fluid to take a more tortuous path through the filter. When this happens, the fluid comes into contact with far more of the media than it would if it were to flow straight through the filter. The fluid, along with the impurities to be removed, is in contact with the individual grains of sand or other filter media. Bringing the contaminants into contact with the filter media is the first stage - the contaminants are transported into contact with the filter media.

In order to remove the pollutants from the fluid, the media must have some way of capturing and retaining the contaminant. This can be accomplished in a number of ways, from chemical bonding on reactive media to simple sedimentation in the interstices among the media components. When designed carefully, media filtration is capable of removing large pollutant loads from influent fluid streams.

The selection of filter media can depend on many factors, including the type of contaminants targeted for removal, the desired flow rates through the filter, and the cost and weight of the media. While filtration is a proven technology in fields such as wastewater treatment, drinking water treatment and industrial processes, it is relatively new in the field of stormwater treatment.

One of the challenges of stormwater management is dealing with the highly variable runoff flow rates that result from storms. In stormwater applications, treatment devices are subjected to widely varying flow rates, from very slow trickles to the runoff resulting from torrential downpours. To accommodate these variations, many stormwater treatment devices are designed with an internal or external bypass. The bypass allows flows in excess of the intended treatment capacity to pass through the unit untreated while continuing to treat flows within the intended range. This is a viable technology because of the "first flush" effect in stormwater runoff. During the beginning of a storm event, a "flush" of contaminant is carried off from a site with the first bit of runoff. This flush includes the pollutants that have collected on that site since the last storm, and comprises the majority of the pollution load from each storm event. If the first flush is treated adequately, a majority of the potential contaminants will be removed during that treatment, and the subsequent bypass flows during extreme storms will not contain the same heavy pollutant loads.

US-A-6,027,639 discloses an apparatus which treats stormwater and includes a cylindrical basket that has a housing with a circumferentially extending air slot near the base of the housing. The basket contains an annular bed of absorbent material surrounded by a filter cartridge. Water flows radially inward through the filter and the bed into a cylindrical inner drainage space which has an outlet at its lower end, covered by a float valve. The drainage space is also in fluid communication with a one-way valve that allows air to pass from the housing into the environment. During operation, the float valve lifts when the water level rises and air is expelled from the drainage space through the one-way valve. As a result, water is continuously syphoned through the basket apparatus. It is asserted that, when the water level drops, air enters through the air inlet slot of the housing and rises in turbulent fashion along the filter, scouring the filter and dislodging particulates, and that, as a result, the filter is cleaned and the infiltration capacity of the basket filter is maintained.

According to one aspect of the present invention, there is provided a method comprising making a filter for filtering a fluid by: providing a tube, providing a web of flexible material, and passing said web around said tube for 360° to form a lap and further at least part way around the tube so as to overlap the lap.

According to a second aspect of the present invention, there is provided a filter for filtering fluid, comprising: a tube, and a web of flexible material extending around said tube for at least 360° to form at least one lap around said tube.

Owing to these aspects of the invention, it is possible to manufacture a filter very simply.

According to a third aspect of the present invention, there is provided apparatus for cleaning a fluid, comprising: a tank for receiving the fluid to be cleaned, an enclosure located in said tank, said enclosure being open at its lower end and closed at its upper end, a fluid cleaning device located in said enclosure and through which the fluid to be cleaned passes as the fluid level rises in said enclosure, and an output conduit for the fluid that has passed through said fluid cleaning device.

According to a fourth aspect of the present invention, there is provided a filtering device for filtering a fluid comprising: a body having first and second sides with a hole extending through said body from said first side to said second side and a filtering material located between said sides and outside of said hole, said hole forming a fluid passageway and said filtering material forming another fluid passageway, and a fluid guiding system for guiding the fluid to be filtered through the passageways in series.

According to a fifth aspect of the present invention, there is provided apparatus for cleaning a fluid comprising: a tank for receiving the fluid to be cleaned, an enclosure located in said tank, said enclosure being open at its lower end and closed at its upper end, a fluid cleaning device located in said enclosure and through which the fluid to be cleaned passes as the fluid level rises in said enclosure, and an output conduit for receiving the fluid that has passed through said fluid cleaning device.

Owing to these aspects of the invention, it is possible to improve the cleaning, in particular filtering, effect.

Although the present invention was developed as a stormwater filtration technology, its application is not limited to that field. In principle, the invention can function to remove contaminants from any fluid stream, in particular a fluid stream with a highly variable flow rate.

This invention relates broadly to a system for filtering a fluid; however, one specific application of the invention is to remove small particles, including dissolved contaminants, from runoff water. One application to runoff water is to remove firstly the large particles of contaminants by gravity separation, for example as disclosed in US-A-5,746,911 and/or US-A-6,264,835. After such gravity removal of the contaminants that are in the form of large particles, the runoff water is fed to the present system for removal of small particles and/or dissolved contaminants.

The present system may employ a large tank, which may be in the form of a vault, for receiving the runoff water. There are one or more small tanks in the large tank. Each small tank is inverted to form an enclosure. Each small tank receives water, from the large tank, at its open lower end. The water entering the small tank rises, as the water level in the large tank rises, and flows through a filter. When the water level rises above the top of the filter, the water enters an outlet tube which preferably extends along the centreline of the filter. A float, a valve and a check valve may cause the system to function as a syphon and feed the filtered clean water to an outlet.

In order that the invention may be clearly and completely disclosed, reference will now be made, by way of example, to the accompanying drawings, in which:-
Figure 1 is a diagrammatic top plan view of a stormwater filtration apparatus;
Figure 2 is a diagrammatic, vertical sectional view of the apparatus taken along the line II-II of Figure 1;
Figure 3 is a detail of Figure 2 and illustrating a rolled filter of the apparatus; and
Figure 4 is a diagrammatic elevation of a float valve of the apparatus housed in a central drainage tube of the apparatus, with the filter being shown diagrammatically in vertical, axial section.

The apparatus described with reference to the drawings is a modular filter system for stormwater runoff treatment. The filter itself comprises a plurality of layers of drainage materiel and filter material as described in US-2005/0178719A1. A feature of the apparatus is a housing for the rolled filter described in US-A-2005/0178719A1. This housing 101 (in the form of an inverted tank 101) controls the flow through the filter 201 by means of a syphon and a one-way valve 103 in the housing 101.

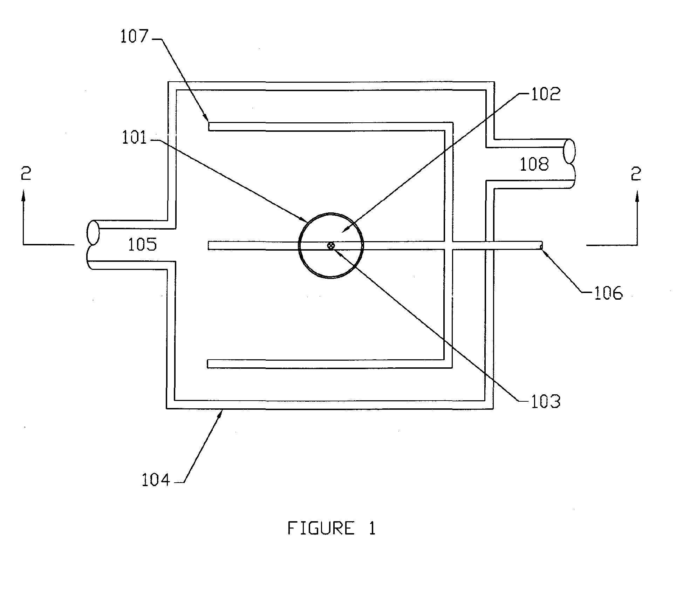

Referring to Figure 1, the modular filter includes the inverted tank 101, which may be in the form of a vertical pipe with a solid plate 102 closing the top of the pipe. In that solid plate 102 is located the check valve 103 that allows air to escape from the inside of the modular filter upwards to the outside. The valve 103 is configured such that it prevents air from travelling in the opposite direction. The modular filter itself is housed in a vault 104 or similar structure. The vault 104 has an inlet 105 and an outlet 106. The inlet 105 accepts stormwater runoff from an upstream drainage system (not shown) and conveys that water to the modular filter. Once the water has passed through the filter, the treated water enters an underdrain manifold 107 and is then conveyed to an outlet 106. The outlet 106 discharges the water to a storm drain outfall (not shown). Also present in the vault 104 is a bypass 108 which conveys flows that exceed the treatment capacity of the modular filter to a storm drain outfall. This storm drain outfall may be the same outfall as that which accepts treated water from the outlet 106, or it may be a different outfall.

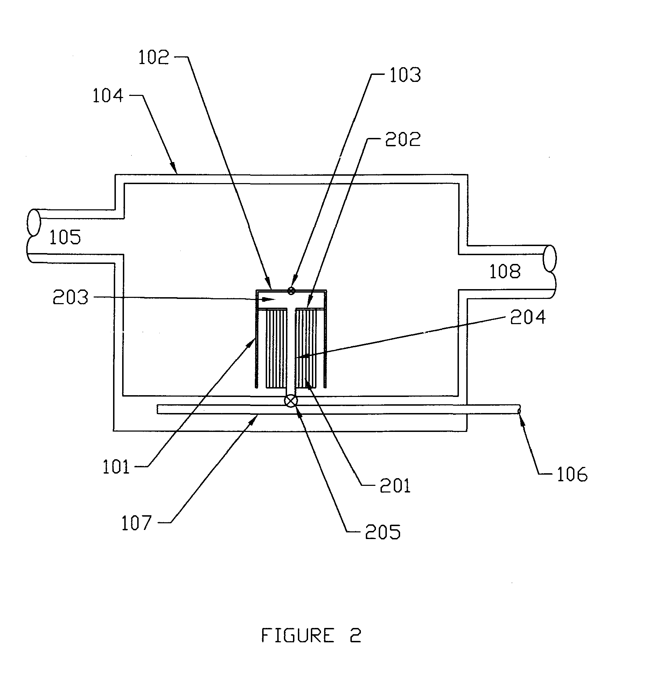

Referring to Figure 2, the inverted tank 101 is set above the floor of the vault 104, allowing water to flow underneath the tank 101. Within the tank 101 is a rolled filter 201 as described in US-2005/0178719A1. The rolled filter 201 is capped by the perforated plate 202, which is in communication with a cavity 203. The cavity 203 is in communication with a drain pipe 204, which is a vertical pipe which extends downwards and connects to the underdrain manifold 107. The drain pipe 204 also includes a flow restriction 205, which limits the flow rate of water through the drain pipe 104 into the underdrain manifold 107. The cavity 203 is closed at the top by the plate 102, which contains the check valve 103.

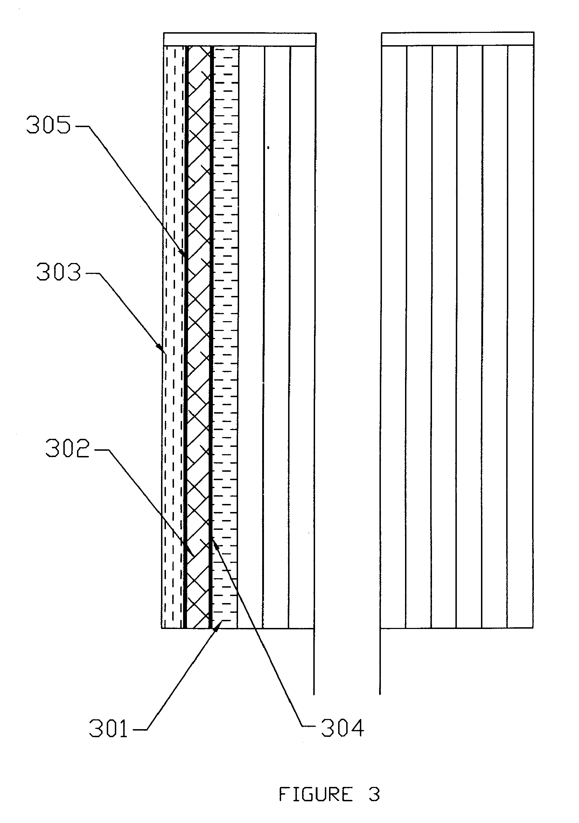

Figure 3 shows a detail of the rolled filter as described in US-2005/0178719A1. The filter comprises three or more linked layers of material, and is assembled by rolling the several assembled layers as a single web. The three layers include an inlet layer 301, which is open at the bottom and allows water to flow upwards into the rolled filter, a filter media layer 302, which may contain sand, charcoal, or other granular material, and an outlet layer 303, which is open at the top and allows water to leave the rolled filter. The layers are separated by permeable barriers 304 and 305.

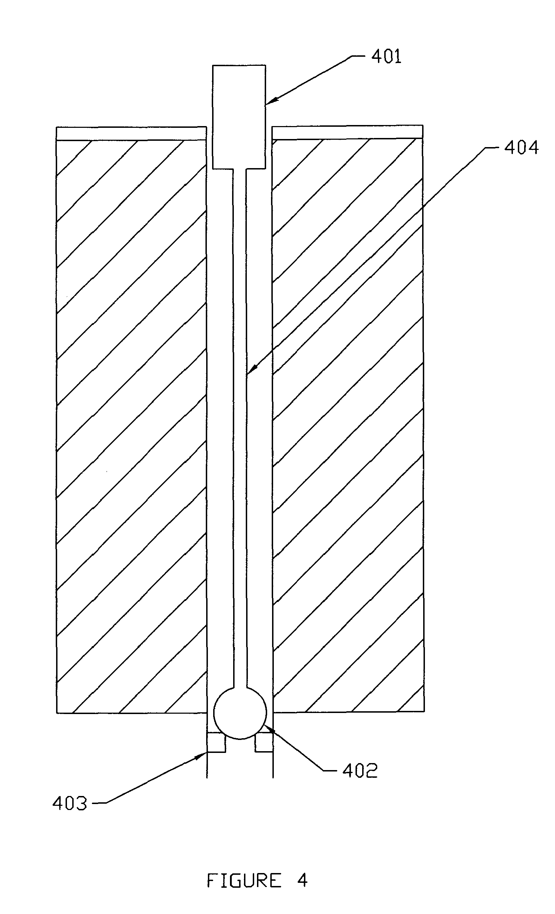

Figure 4 shows a float valve used to control the flow through the filter cartridge constituted by the layers 301 to 305. A valve ball 402 is seated in a valve seat 403. The valve ball 402 is connected to a float 401 by a linkage 404 such that, when the float 401 is raised, the valve ball 402 is raised at the same time.

The apparatus may be assembled with a single modular filter, as shown in Figure 1, or with an array of modular filters, each of which is connected to the underdrain manifold 107.

In operation of the apparatus, when water enters the vault 104 through the inlet 105, It begins to accumulate within the vault 104. As more water flows into the vault 104, the water level continues to rise until it is above the bottom of the inverted tank 101. Under these conditions, the water level is the same in the vault 104 itself, within the tank 101, and within the inlet layer 301 of the rolled filter unit. When the water level in the vault 104 reaches the level of the perforated plate 202, there is sufficient hydraulic pressure to begin flow through the rolled filter 201. Water flows from the inlet layer 301 horizontally through the permeable barrier 304 into the filter media layer 302. From the filter media layer 302 the water continues horizontally through the permeable barrier 305 and into the outlet layer 303. In the outlet 303, the water flows upwards through the perforated plate 202 and into the cavity 203.

When the water enters the cavity 203, it displaces the air already inside the cavity, which is allowed to leave through the check valve 103. The water immediately flows into the drain pipe 204, where it flows downwards toward the float valve ball 402 and the valve seat 403. If the drain pipe 204 is not full, the flow is stopped by the closed float valve 402,403, and the water level in the drain pipe 204 rises. When the water in the drain pipe 204 is at a sufficient level, it forces the float 401 upwards by buoyant force. The float 401 is connected to the ball 402 by the linkage 404, so that the rising of the float 401 causes the ball 402 to rise, opening the valve 402,403. At this point, the water flows through the float valve 402,403, past the flow restriction 205, and into the underdrain manifold 107. When the flow through the filter unit exceeds the limit of the flow restriction 205, the water level in the cavity 203 begins to rise further. As the water level in the cavity 203 rises, more air is displaced through the check valve 103, until the cavity 203 is entirely filled with water. If the water level in the vault 104 exceeds the elevation of the bypass 108, the water above the elevation enters the bypass 108 and is conveyed away from the vault 104.

The filter continues operating in this manner as long as water is being delivered to it at a sufficient flow rate through the inlet 105. When the influent flow rate drops or the influent flow stops, the water level in the vault 104 begins to fall. The water level within the tank 101 and the cavity 203, however, does not drop. Because the air has been evacuated from the cavity 203 and because the drain pipe 204 is flowing full owing to the limitation of the flow restriction 205, a syphon effect will continue to draw water from the vault 104, through the rolled filter 201, into the cavity 203 and the drain pipe 204. Flow will continue in this fashion until the water level in the vault 104 drops below the bottom of the tank 101.

When the water level in the vault 104 falls below the bottom of the tank 101, air flowing under the tank 101 will replace the water in the cavity 203, breaking the syphon effect. When the syphon is broken, the water in the drain pipe 204 will drain, and the lowering water level will cause the float 401 and the ball 402 to fall. The ball 402 will settle in the seat 403, cutting off water flow through the filter. The water in the inlet layer 301 of the rolled filter 201 will immediately drain out of the filter and empty into the vault 104. Water within the filter media layer 302 will pass through the permeable barrier 304, into the inlet layer 301, and then out into the vault 104; water in the outlet layer 303 will pass through the permeable barrier 305 into the filter media layer 302, through the permeable barrier 304, into the inlet layer 301, and thence out into the vault 104. The last drainage pattern from the outlet layer 303 through the filter media layer 302 and back into the vault 104 will also act as backwash, cleaning some amount of contaminants off from the filter media layer 302. The water remaining in the vault 104 will stay in that vault until the next time it rains, at which point the system will begin operation again.

## Claims

1. A method comprising making a filter (201) for filtering a fluid by: providing a tube (204), providing a web (301-305) of flexible material, and passing said web (301-305) around said tube (204) for 360° to form a lap and further at least part way around the tube (204) so as to overlap the lap.

2. A method according to claim 1, wherein said fluid is passed through said tube (204) and the wound web (301-305) in series.

3. A method according to claim 2, wherein said fluid passes through said wound web (301-305) before passing through said tube (204).

4. A method according to claim 3, wherein said fluid is passed upwardly, against the force of gravity, through said wound web (301-305) and downwardly, by the force of gravity, through said tube (204).

5. A filter for filtering fluid, comprising: a tube (204), and a web (301-305) of flexible material extending around said tube (204) for at least 360° to form at least one lap around said tube (204).

6. A filter according to in claim 5, and including a wall (101) around said web (301-305) and which in cooperation with the outside surface of said tube (204) guides the fluid to be filtered through the wound web (301-305), the arrangement being such that the fluid to be filtered is fed upwardly through said wound web (301-305) and thereafter downwardly through said tube (204).

7. A filter according to claim 6, and further comprising an enclosure (101) for receiving the fluid that has passed through said wound web (301-305) and delivering that fluid to said tube (204), said enclosure (101) having a check valve (103) for allowing air in the enclosure (101) to escape but preventing air outside the enclosure (101) from entering the enclosure (101).

8. Apparatus for cleaning a fluid, comprising: a tank (104) for receiving the fluid to be cleaned, an enclosure (101) located in said tank (104), said enclosure (101) being open at its lower end and closed at its upper end, a fluid cleaning device (301-305) located in said enclosure (101) and through which the fluid to be cleaned passes as the fluid level rises in said enclosure (101), and an output conduit (204) for the fluid that has passed through said fluid cleaning device (301-305).

9. Apparatus according to claim 8, wherein said outlet conduit (204) extends through said fluid cleaning device (301-305).

10. Apparatus according to claim 9, wherein the arrangement is such that the flow through said conduit (204) is controlled in accordance with the fluid level above said cleaning device (301-305).

11. Apparatus according to any one of claims 8 to 10, in which said enclosure (101) has a normally closed check valve (103) which opens when the pressure of the fluid downstream of said cleaning device (301-305) exceeds a given value.

12. Apparatus according to claim 9 or 10, or claim 11 as appended to claim 9, and further comprising: a float-controlled valve (402,403) in said conduit (204), and a float (401) located in any fluid above said fluid cleaning device (301-305) for controlling said float-controlled valve (402,403).

13. A filtering device for filtering a fluid comprising: a body (201) having first and second sides with a hole (204) extending through said body (201) from said first side to said second side and a filtering material (302) located between said sides and outside of said hole (204), said hole (204) forming a fluid passageway and said filtering material (302) forming another fluid passageway, and a fluid guiding system (101,204) for guiding the fluid to be filtered through the passageways in series.

14. A filtering device according to claim 13, in which said first side is a top side and said second side is a bottom side.

15. A filtering device according to claim 14, in which said fluid guiding system (101,204) guides the fluid upwardly against the force of gravity from said second side to said first side and thereafter to said hole (204) .

16. Apparatus for cleaning a fluid comprising: a tank (104) for receiving the fluid to be cleaned, an enclosure (101) located in said tank (104), said enclosure (101) being open at its lower end and closed at its upper end, a fluid cleaning device (301-305) located in said enclosure (101) and through which the fluid to be cleaned passes as the fluid level rises in said enclosure (101), and an output conduit (204) for receiving the fluid that has passed through said fluid cleaning device (301-305).

17. Apparatus according to claim 16, and further comprising: a valve (402,403) in said output conduit (204) for allowing and preventing flow through said conduit (204), and means (401) responsive to the level of the fluid in said enclosure (101) for controlling said valve (402, 403) .

18. Apparatus according to claim 16 or 17, and further comprising a check valve (103) in said enclosure (101) which opens in response to an increase in pressure downstream of said fluid cleaning device (301-305).

19. Apparatus according to any one of claims 16 to 18, wherein the arrangement is such that moving of liquid constituting said fluid through the enclosure (101) and the output conduit (204) reduces the pressure downstream of said cleaning device (301-305), thereby forming a syphon.

20. Apparatus according to any one of claims 16 to 18, and further comprising a by-pass outlet (108) at an elevation higher than said upper end.

21. Apparatus according to any one of claims 16 to 20, wherein the arrangement is such that at least a portion of said cleaning device (301-305) is back-washable.
